# EUROPÄISCHE PATENTSCHRIFT

(11) **EP 2 559 120 B1**
(45) Veröffentlichungstag und Bekanntmachung des Hinweises auf die Patenterteilung: **02.11.2016**
(21) Anmeldenummer: 11708278.4
(22) Anmeldetag: 15.03.2011
(51) Int. Cl.: H02B 1/30

(54) **GEHÄUSETEIL FÜR EINEN SCHALTSCHRANK**
HOUSING PART FOR A SWITCHGEAR CABINET
PARTIE BOÎTIER POUR UNE ARMOIRE DE COMMANDE

(30) Priorität: 16.04.2010 DE 102010016489
(43) Veröffentlichungstag der Anmeldung: 20.02.2013
(73) Patentinhaber: RITTAL GmbH & Co. KG, 35745 Herborn (DE)
(72) Erfinder: ROOT, Paul, 35080 Bad Endbach (DE); SCHINDLER, Timo, 35649 Bischoffen (DE); REUTER, Wolfgang, 56479 Liebenscheid (DE)
(74) Vertreter: Angerhausen, Christoph
(86) Internationale Anmeldenummer: PCT/EP2011/053889
(87) Internationale Veröffentlichungsnummer: WO 2011/128167

(56) Entgegenhaltungen:
- EP-A1- 1 748 525
- DE-A1- 19 500 739
- DE-C1- 19 536 950
- DE-U1- 7 831 584
- DE-U1-202006 004 211
- US-A- 5 775 051

## Beschreibung

Die Erfindung betrifft ein Gehäuse, das drei Gehäuseteile für einen Schaltschrank mit drei U-förmig zueinander angeordneten Wandelementen aufweist, die in Gehäuseeckbereichen mittels Biegekanten einteilig miteinander verbunden sind, wobei jedes Gehäuseteil ein Wandelement aufweist, das an wenigstens einem seiner Ränder ein einteilig anprofiliertes Rahmenprofil aufweist, wobei das Rahmenprofil an seiner Gehäuseinnenseite Profilseiten mit Befestigungsaufnahmen aufweist, und wobei das Rahmenprofil zwei erste Profilseiten aufweist, die parallel zu dem Wandelement ausgerichtet sind, und zwei zweite Profilseiten aufweist, die jeweils senkrecht zu dem Wandelement stehen.

Die DE 78 31 584 U1 beschreibt einen Schaltschrank für die Aufnahme von Einbauteilen, mit einer profilierten, separat hergestellten Zarge, an der eine Rückwand und eine Tür oder eine Vorderwand befestigt sind, wobei im Inneren des Schrankes Befestigungsstellen für Einbauteile oder für Träger von Einbauteilen angeordnet sind. Von der Zarge ragen Befestigungsflansche ab, die Befestigungsstellen bilden. Ein ähnliches Gehäuse ist auch aus der DE 195 36 950 Cl und der US 5,775,051 A bekannt.

Aus der DE 37 31 547 C3 ist ein Schaltschrank bekannt, der aus mehreren Gehäuseteilen zusammengesetzt ist. Dabei weist jedes Gehäuseteil ein flächiges Wandelement auf, das an seinen vier Rändern derart abgekantet ist, dass hier Rahmenprofile entstehen. Jedes der Rahmenprofile weist zwei senkrecht zueinander ausgerichtete Profilseiten auf. In diese sind Reihen von Befestigungsaufnahmen eingebracht, wobei die Befestigungsaufnahmen zueinander in gleicher Teilung beabstandet angeordnet sind. Die Wandelemente werden in den Eckbereichen des Schaltschran- kes aneinandergesetzt und miteinander verschweißt. Auf diese Weise entsteht mit zwei vertikalen und zwei horizontalen Wandelementen ein rahmenartiges Gehäuse- teil. Dieses kann frontseitig mit einer Tür und rückseitig mit einer Rückwand verschlossen werden.

Schaltschränke werden zur Aufnahme von elektrischen Einbauten verwendet. Dabei kommt zunehmend leistungsfähigere Elektronik zum Einsatz. Diese soll möglichst platzsparend in den Innenräumen der Schaltschränke installiert werden, wobei eine hohe Variabilität hinsichtlich der Befestigungsmöglichkeiten gefordert wird.

Es ist daher Aufgabe der Erfindung, ein Gehäuseteil für einen Schaltschrank der eingangs erwähnten Art zu schaffen, mit dem sich vielfältige Befestigungsmöglichkeiten bei gleichzeitig raumsparender Bauweise ergeben.

Diese Aufgabe wird dadurch gelöst, dass die ersten und die zweiten Profilseiten jeweils eine Reihe von Befestigungsaufnahmen aufweisen und das Rahmenprofil einen geschlossenen Profilabschnitt bildet, an dem ein offener Profilabschnitt mittelbar oder unmittelbar angeschlossen ist, wobei zwei der Profilseiten rechtwinklig zueinander angeordnet sind und jeweils den geschlossenen Profilabschnitt innenseitig begrenzen, und wobei zwei weitere der Profilseiten rechtwinklig zueinander angeordnet sind und den offenen Profilabschnitt innenseitig begrenzen, wobei das Wandelement über einen Übergangsabschnitt an das Rahmenprofil angeformt ist und der Übergangsabschnitt in eine Abkantung übergeht, von der ein Anlageabschnitt abgekantet ist, der rechtwinklig zu dem Wandelement ausgerichtet ist, wobei der Anlageabschnitt zusammen mit einem weiteren Anlageabschnitt und einem Befestigungsabschnitt eine V-förmige Regenrinne bildet, wobei die Regenrinne der Ralunenprofile in den Stoßbereichen der Rahmenprofile ineinander übergehen, und wobei die die offene U-Seite begrenzenden vertikalen Wandelemente mittels eines Schaltschranksockels miteinander verbunden sind.
Mit den beiden Profilseiten werden Befestigungsebenen geboten, die parallel zu dem Wandelement ausgerichtet sind. Auf diese Weise können die elektrischen Einbauten in verschiedenen Abständen zu dem Wandelement wahlweise auf der einen oder der anderen Befestigungsebene montiert werden. Dadurch ergeben sich vielfältige Befestigungsmöglichkeiten. Zudem kann dann, wenn die elektrischen Einbauten auf der dem Wandelement zur nächstliegenden Befestigungsebene fixiert werden, eine platzsparende Bauweise realisiert werden. Die Befestigungsmöglichkeiten sind noch dadurch erweitert, dass das Rahmenprofil zwei weitere Profilseiten mit jeweils einer Reihe von Befestigungsaufnahmen aufweist, die jeweils senkrecht zu dem Wandelement stehen. Auf diese Weise bietet ein Rahmenprofil vier Profilseiten, die vier Befestigungsebenen ermöglichen. Weiterhin ist vorgesehen, dass das Rahmenprofil einen geschlossenen Profilabschnitt bildet, an dem ein offener Profilabschnitt mittelbar oder unmittelbar angeschlossen ist. Mittels des geschlossenen Profilabschnittes erreicht das Rahmenprofil eine hohe Profilsteifigkeit, sodass hohe Lasten abgetragen werden können, ohne dass eine Verwendung des Rahmenprofils auftritt. Der offene Profilabschnitt kann bspw. für weitere Befestigungsaufgaben herangezogen werden und erhöht die Funktionalität des Rahmenprofils.

Das Rahmenprofil kann weiterhin außenseitig eine offene Befestigungsaufnalune mit einem Befestigungsabschnitt für Anbauteile bilden. An dem Befestigungsabschnitt lassen sich bspw. frontseitig Scharniere oder Schließelemente fixieren. Weiterhin ist es denkbar, am Befestigungsabschnitt Rückwandhalter etc. anzubauen. Hierbei hat es sich als besonders vorteilhaft erwiesen, wenn der Befestigungsabschnitt der Befestigungsaufnahme senkrecht zu der Querschnittsdiagonalen des Rahmenprofils steht. Dabei sollte sich dann das Wandelement in Richtung der Wandelementebene über den Befestigungsabschnitt hinaus erstrecken. Auf diese Weise deckt das Wandelement den Bereich des Befestigungsabschnittes teilweise optisch ab, sodass eine ansprechende Gestaltung erreicht wird. Darüber hinaus kann im Scharnierbereich einer Tür mit der Überdeckung des Wandelementes eine Spaltüberdeckung erreicht werden, die zur Gefahrenvorbeugung dient, indem sie das Einklemmen von Fingern verhindert.

Die Funktionalität des Gehäuseteils lässt sich weiterhin dadurch erhöhen, dass das Rahmenprofil mit zwei seiner im Winkel zueinander stehenden Profilteilen eine Regenrinne bildet. Mit der Regenrinne kann abfließendes Wasser gesammelt und zuverlässig abgeführt werden, ohne dass es in den Bereich des Schaltschrankinnen- raumes vordringt.

Dadurch, dass das Gehäuseteil zwei zueinander parallele Wandelemente aufweist, die mittels eines weiteren Wandelementes U-förmig einteilig miteinander verbunden sind, und dass die Rahmenprofile der Wandelemente in den Wandelement- Übergangsbereichen ineinander übergehen, wird eine Konstruktion geschaffen, bei der drei Seiten des Schaltschrankes von nur einem Bauteil begrenzt sind. Da die Wandelemente einteilig ineinander übergehen, entfällt an diesen Stellen der sonst übliche Dichtungs- bzw. Verbindungsaufwand.

Eine besonders bevorzugte Ausgestaltungsvariante der Erfindung sieht vor, dass an dem Wandelement zwei Rahmenprofile an gegenüberliegenden Wandelementseiten derart anprofiliert sind, dass die Rahmenprofile bezüglich ihrer Längsachsen zueinander parallel ausgerichtet sind. Wenn vorgesehen ist, dass das Rahmenprofil eine Dichtfläche bildet, die senkrecht zu dem Wandelement steht, und zur Außenseite des Gehäuseteils gerichtet ist, dann ergibt sich ein flächiger Anlagebereich, mit dem unterschiedlichste Dichtungsaufgaben erfüllt werden können. Beispielsweise können Türen oder Wandelemente einfach abgedichtet werden, wobei sich mit der sich senkrecht zur Wandelementebene erstreckenden Dichtfläche großzügig Fertigungstoleranzen ausgleichen lassen.

Die Erfindung wird im Folgenden anhand eines in den Zeichnungen dargestellten Ausführungsbeispieles näher erläutert. Es zeigen:
Figur 1 haubenartige Konstruktion mit drei einteilig miteinander verbundenen Gehäuseteilen;
Figur 2 ein der Figur 1 entnommenes Detail in vergrößerter Ansicht;
Figur 3 in perspektivischer Außenansicht ein vergrößertes Detail der Konstruktion gemäß Figur 1 ;
Figur 4 das in Figur 3 dargestellte Detail, jedoch in perspektivischer Innenansicht; Figur 5 einen Horizontalschnitt durch einen Schaltschrank;
Figur 6 das in Figur 5 mit VI markierte Detail;
Figur 7 das in Figur 5 mit VII markierte Detail;
Figur 8 das in Figur 5 mit VIII markierte Detail
Figur 9 das in Figur 5 mit IX markierte Detail.

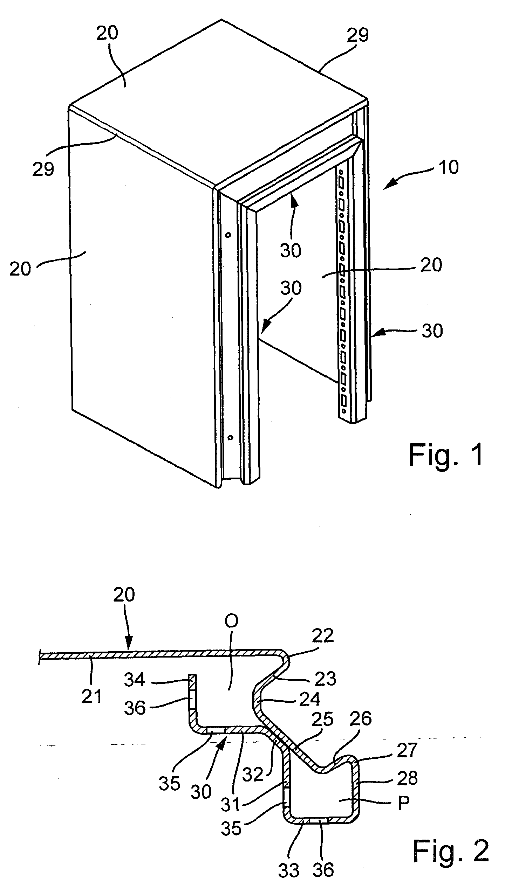

Figur 1 zeigt ein Gehäuse 10, das drei Gehäuseteile 20 aufweist, die in den Gehäuseeckbereichen mittels Biegekanten 29 einteilig miteinander verbunden sind. Sowohl front- als auch rückseitig weist das Gehäuse 10 drei Rahmenprofile 30 auf, die jeweils einteilig von den Gehäuseteilen 20 abgekantet sind. Die in Figur 1 dargestellte Baueinheit ist als Blechbiegeteil aus einem einzigen Stahlblechzuschnitt gefertigt.

Die Figur 2 zeigt exemplarisch ein Gehäuseteil 20 in Schnittdarstellung. Wie diese Zeichnung veranschaulicht, weist das Gehäuseteil 20 ein Wandelement 21 auf, an das über einen Übergangsabschnitt 22 das Rahmenprofil 30 angeformt ist. Der Übergangsabschnitt 22 geht in eine Abkantung 23 über. Von der Abkantung 23 ist ein Anlageabschnitt 24 abgekantet, der rechtwinklig zu dem Wandelement 21 ausgerichtet ist. Der Anlageabschnitt 24 bildet zusammen mit einem weiteren Anlageabschnitt 26 und einem Befestigungsabschnitt 25 eine Außenaufnahme zur Befestigung von Anbauteilen, wie dies später näher erläutert wird.

Weiterhin bildet der Befestigungsabschnitt 25 und der Anlageabschnitt 26 eine V- förmige Regenrinne. Aus Figur 1 wird deutlich, dass die Regenrinnen in den Stoßbereichen der Rahmenprofile 30 ineinander übergehen, sodass vom Dach abfließendes Regenwasser seitlich über die vertikalen Rahmenprofile abgeleitet werden kann. Der Anlageabschnitt 26 geht über einen Übergangsabschnitt 27 in eine Dichtfläche 28 über, die vertikal zum Wandelement 21 steht. Die Abkantung 23, die Anlageabschnitte 24 und 26, der Befestigungsabschnitt 25 und die Dichtfläche 28 bilden das Außenprofil des Rahmenprofils 30. An dieses Außenprofil schließt sich ein Innenprofil einteilig an. Dabei ist eine Profilseite 33 rechtwinklig von der Dichtfläche 28 abgekantet. Diese Profilseite 33 geht in eine weitere Profilseite 31 über, die wiederum rechtwinklig zu dem Wandelement 21 steht. Die Profilseite 31, geht über einen Verbindungsabschnitt 32 in eine weitere Profilseite 31 über, wobei diese beiden Profilseiten 31 eine Innenaufnahme bilden. Der Verbindungsabschnitt 32 ist mit dem Befestigungsabschnitt 25 flächig verbunden. Dabei kann eine Verklebung, eine Schweißverbindung oder eine sonstige geeignete Verbindung gewählt werden.

Das Rahmenprofil 30 läuft in einem Endabschnitt 34 aus, das wiederum rechtwinklig zum Wandelement 21 steht. Die beiden rechtwinklig zueinander stehenden Profilseiten 31 sowie die Profilseiten 33, 34, die ebenfalls rechtwinklig zueinander stehen, sind jeweils mit einer Reihe von in gleicher Teilung zueinander beabstandeten Befestigungsaufnahmen 35, 36 versehen.

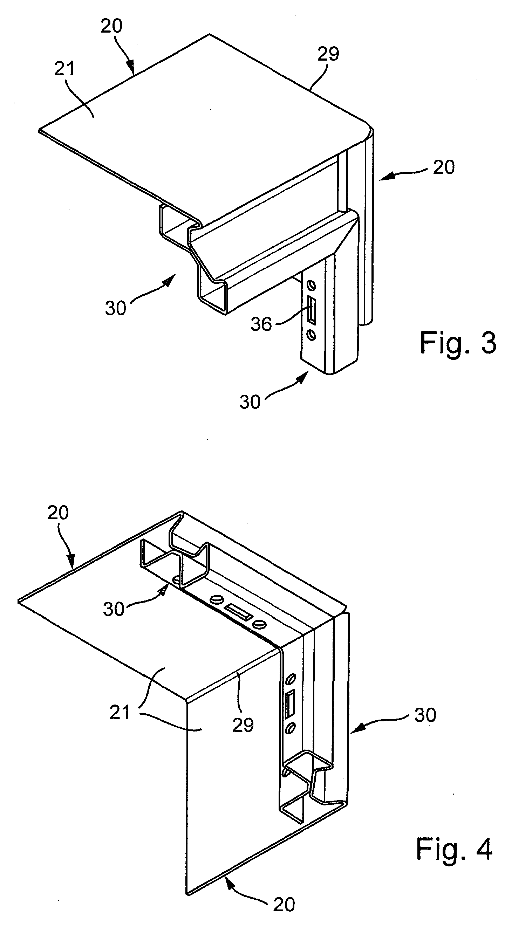

Figur 3 veranschaulicht, dass die Gehäuseteile 20 mittels der Biegekante 29 einteilig aneinander geschlossen sind. Im Verbindungsbereich sind die Rahmenprofile 30 auf Gärung geschnitten, sodass sie bündig ineinander übergehen, wie dies auch die Figur 4 erkennen lässt.

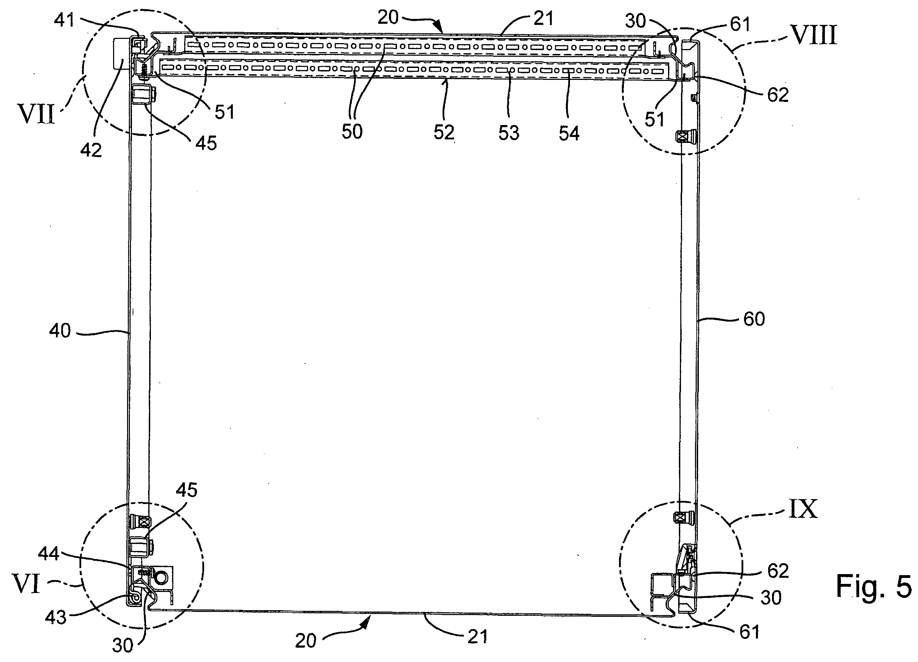

In Figur 5 ist zur Veranschaulichung der Befestigungsmöglichkeiten, die durch die Erfindung geboten werden, ein Horizontalschnitt durch einen Schaltschrank gezeigt. Dabei kommt die in Figur 1 gezeigte Baueinheit zum Einsatz, wobei aufgrund der Schnittdarstellung die beiden vertikalen Gehäuseteile 20 erkennbar sind. Frontseitig wird der Schaltschrank mit einer Tür 40 und rückseitig mit einer Rückwand 60 komplettiert. Die Tür 40 ist als Blechbauteil ausgeführt und weist einen umlaufenden, ab- gekanteten Rand 41 auf. Die Tür 40 ist mittels Scharnieren 43 an dem linken Rahmenprofil 30 des unteren Gehäuseteils 20 anscharniert.

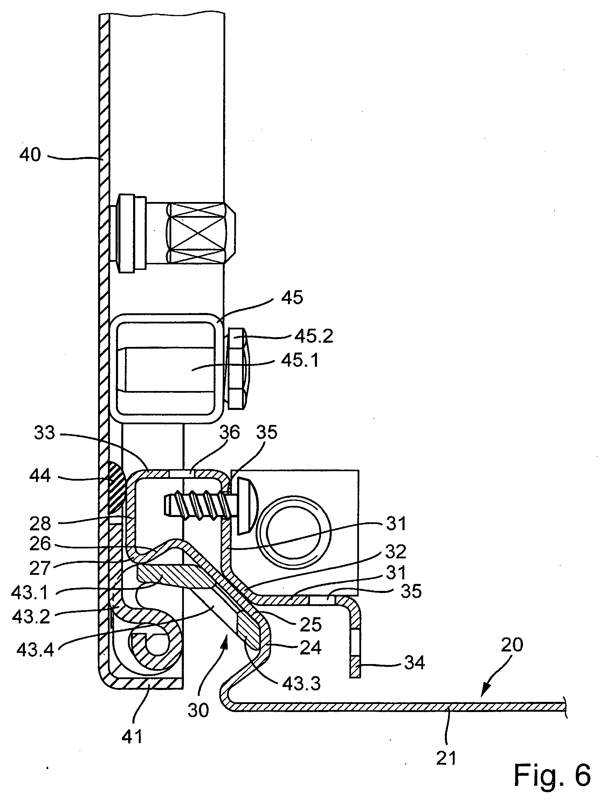

Figur 6 zeigt das in Figur 5 mit VI markierte Detail in vergrößerter Darstellung. Wie diese Zeichnung veranschaulicht, besteht das Scharnier 43 aus zwei Scharnierteilen 43.1 , 43.2, die gelenkig miteinander verbunden sind, wobei die Scharnierachse senkrecht zur Bildebene verläuft. Das Scharnierteil 43.2 ist im Bereich des abgekanteten Randes 41 innenseitig auf der Tür 40 befestigt. Das Scharnierteil 43.2 weist ein Befestigungsstück 43.3 auf, das auf dem Befestigungsabschnitt 25 aufgesetzt und mit einer Schrägfläche an dem Anlageabschnitt 24 ausgerichtet ist. Mittels einer Befestigungsschraube 43.4 kann das Scharnier 43 an seinem zweiten Scharnierteil 43.2 mit dem Befestigungsabschnitt 25 verschraubt werden.

Wie die Figur 5 weiter erkennen lässt, ist innenseitig auf der Tür 40 eine umlaufende Dichtung 44 aufgeschäumt. Diese umlaufende Dichtung 44 kommt im geschlossenen Zustand der Tür 40 an den Dichtflächen 28 der beiden linksseitigen Rahmenprofile 30 zur Anlage. Die Dichtung 44 wird an der Dichtfläche 28 komprimiert, sodass für eine eindeutige Abdichtung gesorgt ist. In dem von der Dichtung 44 umschlossenen Bereich ist weiterhin ein Türrohrrahmen 45 befestigt. Hierzu sind auf der Innenseite der Tür 40 Gewindebolzen 45.1 aufgeschweißt. Der Türrohrrahmen 45 weist Schraubaufnahmen auf, mittels denen er über die Gewindebolzen 45.1 gesetzt ist. Der Türrohrrahmen 45 ist mittels Muttern 45.2 mit den Gewindebolzen 45.1 verschraubt. Auf dem der Scharnierseite abgewandten Bereich ist an der Tür 40 eine Verschlussmechanik befestigt. An der Türfrontseite trägt die Tür 40 einen Verschluss 42.

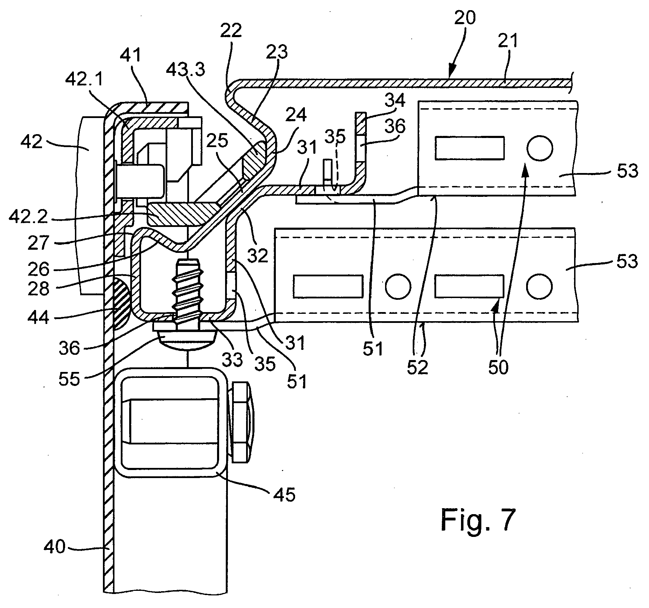

Wie die Figur 7 näher erkennen lässt, steht der Verschluss 42 mit einer im Bereich des Randes 41 rückseitig auf der Tür 40 aufgebrachten Verschlussstange 42.1 in Wirkverbindung. Mittels des Verschlusses 42 kann die Verschlussstange 42.1 senk- recht zur Bildebene verstellt werden. Sie lässt sich dabei mit einem Sperrstück 42.2, welches am oberen linken Rahmenprofil 30 befestigt ist, in bzw. außer Eingriff bringen. Das Sperrelement 42.2 weist identisch zu dem Befestigungsstück 43.3 des Scharniers 43 ein Befestigungsstück 42.3 auf, das mit dem Befestigungsabschnitt 25 verschraubt ist.

Wie die Figur 7 weiter erkennen lässt, können mit den vertikalen Rahmenprofilen 30 Montagechassis 50 verschraubt werden. Die Montagechassis 50 sind als U-förmige Schienen mit einem vertikalen Wandabschnitt 52 und zwei davon rechtwinklig abgekanteten Schenkeln 53 ausgeführt. Die beiden Schenkel 53 stehen zueinander parallel beabstandet. Der Wandabschnitt 52 ist an seinen beiden längsseitigen Enden mittels eines Befestigungsabschnittes 51 verlängert. Das in Figur 7 dargestellte obere Montagechassis 50 ist mit den beiden Profilseiten 31 der gegenüberliegenden Rahmenprofile 30 des oberen Gehäuseteils 20 verbunden. Hierzu sind Befestigungsmittel verwendet, die den Befestigungsabschnitt 51 unter Verwendung der Befestigungsaufnahmen 35 mit der jeweils zugeordneten Profilseite 31 verbindet. Das in Figur 7 dargestellte untere Montagechassis 50 ist mit den Profilseiten 33 der beiden gegenüberliegenden vertikalen Rahmenprofile 30 verbunden. Dabei ist wieder der Befestigungsabschnitt 51 auf die Profilseite 33 aufgelegt. Mittels Befestigungselementen (vorliegend selbstschneidende Schrauben 55) ist das Montagechassis 50 über den Befestigungsabschnitt 51 mit der Profilseite 33 verschraubt.

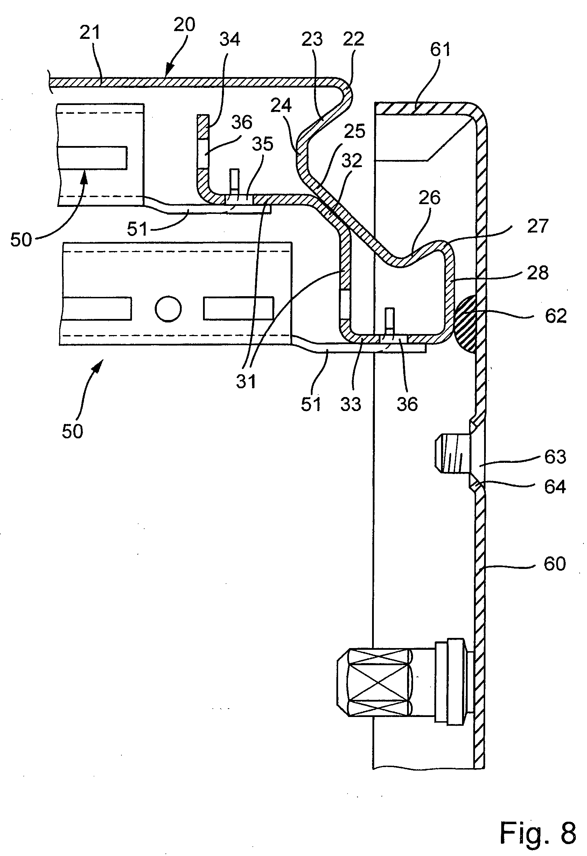

In Figur 8 ist die rechtsseitige Befestigung der Montagechassis 50 gezeigt. Figur 8 zeigt weiterhin die Befestigung einer Rückwand 60 an den beiden rückseitigen vertikalen Rahmenprofilen 30. Die Rückwand 60 weist einen umlaufend abgekanteten Rand 61 auf. Weiterhin ist auf die Innenseite der Rückwand 60 eine Dichtung 62 umlaufend aufgeschäumt. Die Dichtung 62 sitzt im montierten Zustand der Rückwand 60 auf den Dichtflächen 28 der vertikalen Rahmenprofile 30 auf. Wie die Figur 8 erkennen lässt, werden zur Fixierung der Rückwand 60 Wandhalter 65 verwendet. Diese Wandhalter 65 sind mit Zapfen 66 in die Befestigungsaufnahmen 36 der Profilseiten 33 eingesetzt. Zur Verspannung der Wandhalter 65 mit der Rückwand 60 sind in die Rückwand 60 Schraubaufnahmen 64 eingebracht. In diese Schraubaufnahmen 64 können Befestigungsschrauben 63 eingeführt und in Gewindeaufnahmen des Wandhalters 65 eingeschraubt werden. Auf diese Weise wird.der Wandhalter 65 mit dem vertikalen Rahmenprofil 30 einerseits und mit der Rückwand 60 andererseits formschlüssig verspannt.

Zur besseren Übersichtlichkeit ist in Figur 8 lediglich die Befestigungsschraube 63, jedoch nicht der Wandhalter 65 gezeigt.

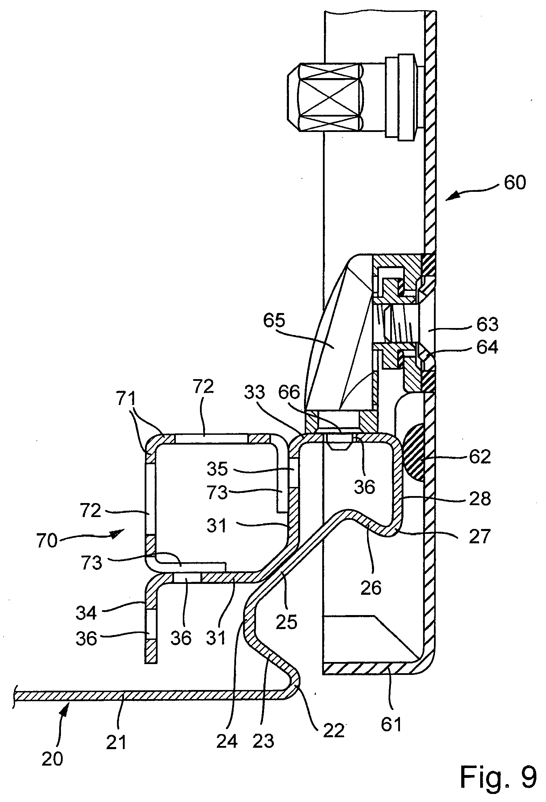

Figur 9 lässt eine weitere Befestigungsvariante am vertikalen Rahmenprofil 30 erkennen. Demgemäß ist eine Montageschiene 70 in die durch die beiden rechtwinklig zueinander stehenden Profilseiten 31 gebildete Innenaufnahme eingesetzt. Die Montageschiene 70 weist zwei senkrecht zueinander stehende Profilwände 71 auf, in die Befestigungsaufnahmen 72 eingearbeitet sind. Von den Profilwänden 71 sind Halteabschnitte 73 rechtwinklig abgekantet, die auf den Profilseiten 31 aufliegen. Die Halteabschnitte 73 weisen Schlitze auf, die mit den Befestigungsaufnahmen 35 der Profilseite 31 in Deckung gebracht werden können. Durch die Befestigungsaufnahme 72 der gegenüberliegenden Profilwand kann eine Schraube durch den Schlitz hindurchgeführt und in die Befestigungsaufnalune 35 eingeschraubt werden. Auf diese Weise kann die Profilwand 71 mit der Profilseite 31 verspannt werden. Mit der vertikalen Montageschiene 70 können die Befestigungsmöglichkeiten an den vertikalen Rahmenprofilen 30 weiter variiert werden.

Wie die Figur 9 weiter erkennen lässt, ist das Wandelement 21 in Richtung der Wandelementebene über den Befestigungsabschnitt 25 bereichsweise verlängert. Auf diese Weise wird das Wandelement 21 dicht bis an den Bereich des Randes 61 der Rückwand 60 herangeführt, sodass nur noch ein schmaler Schlitz gebildet ist, der dann optisch nicht mehr als störend empfunden wird. Auf diese Weise lässt sich ein ansprechendes Design verwirklichen.

Wie die Figuren 4 und 7 erkennen lassen, wird dieser schmale Schlitz auch im Bereich der frontseitigen Tür 40 verwirklicht. Im Bereich der Scharnierseite wird neben der ansprechenden Optik auch ein Klemmschutz erreicht, der ein Einklemmen von Fingern verhindert.

## Patentansprüche

1. Gehäuse (10), das drei Gehäuseteile (20) für einen Schaltschrank mit drei U-förmig zueinander angeordneten Wandelementen (21) aufweist, die in Gehäuseeckbereichen mittels Biegekanten (29) einteilig miteinander verbunden sind, wobei jedes Gehäuseteil (20) ein Wandelement (21) aufweist, das an wenigstens einem seiner Ränder ein einteilig anprofiliertes Rahmenprofil (30) aufweist, wobei das Rahmenprofil (30) an seiner Gehäuseinnenseite Profilseiten (33, 34) mit Befestigungsaufnahmen (35, 36) aufweist, wobei das Rahmenprofil (30) zwei erste Profilseiten (31, 33) aufweist, die parallel zu dem Wandelement (21) ausgerichtet sind, und zwei zweite Profilseiten (31, 34) aufweist, die jeweils senkrecht zu dem Wandelement (21) stehen,
**dadurch gekennzeichnet, dass**
die ersten und die zweiten Profilseiten (31, 33, 34) jeweils eine Reihe von Befestigungsaufnahmen (35, 36) aufweisen und das Rahmenprofil (30) einen geschlossenen Profilabschnitt (P) bildet, an dem ein offener Profilabschnitt (O) mittelbar oder unmittelbar angeschlossen ist,
wobei
zwei der Profilseiten (31, 33, 34) rechtwinklig zueinander angeordnet sind und jeweils den geschlossenen Profilabschnitt (P) innenseitig begrenzen
und
zwei weitere der Profilseiten (31, 33, 34) rechtwinklig zueinander angeordnet sind und den offenen Profilabschnitt (O) innenseitig begrenzen,
wobei das Wandelement (21) über einen Übergangsabschnitt (22) an das Rahmenprofil (30) angeformt ist und der Übergangsabschnitt (22) in eine Abkantung (23) übergeht, von der ein Anlageabschnitt (24) abgekantet ist, der rechtwinklig zu dem Wandelement (21) ausgerichtet ist,
wobei der Anlageabschnitt (24) zusammen mit einem weiteren Anlageabschnitt (26) und einem Befestigungsabschnitt (25) eine V-förmige Regenrinne bildet, wobei die Regenrinnen der Rahmenprofile (30) in den Stoßbereichen der Rahmenprofile (30) ineinander übergehen;
und wobei die die offene U-Seite begrenzenden vertikalen Wandelemente (21) mittels eines Schaltschranksockets miteinander verbunden sind.

2. Gehäuse (10) nach Anspruch 1,
**dadurch gekennzeichnet,**
**dass** das Rahmenprofil (30) außenseitig eine offene Befestigungsaufnahme mit einem Befestigungsabschnitt (25) für Anbauteile bildet.

3. Gehäuse (10) nach Anspruch 1,
**dadurch gekennzeichnet,**
**dass** der Befestigungsabschnitt (25) der Befestigungsaufnahme senkrecht zu der Querschnittsdiagonalen des Rahmenprofils (30) steht, und dass das Wandelement (21) sich in Richtung der Wandelementebene über den Befestigungsabschnitt (25) erstreckt.

4. Gehäuse (10) nach einem der Ansprüche 1 bis 3,
**dadurch gekennzeichnet,**
**dass** das Rahmenprofil (30) mit zwei seiner im Winkel zueinander stehenden Profilteilen (Befestigungsabschnitt 25 und Anlageabschnitt (26)) eine Regenrinne bildet.

5. Gehäuse (10) nach einem der Ansprüche 1 bis 4,
**dadurch gekennzeichnet,**
**dass** es zwei zueinander parallele Wandelemente (21) aufweist, die mittels eines weiteren Wandelementes (21) U-förmig einteilig miteinander verbunden sind, und dass die Rahmenprofile (30) der Wandelemente (21) in den Wandelement-Übergangsbereichen ineinander übergehen.

6. Gehäuse (10) nach einem der Ansprüche 1 bis 5,
**dadurch gekennzeichnet,**
**dass** an dem Wandelement zwei Rahmenprofile (30) an gegenüberliegenden Wandelementseiten derart anprofiliert sind, dass die Rahmenprofile (30) bezüglich ihrer Längsachsen zueinander parallel ausgerichtet sind.

7. Gehäuse (10) nach einem der Ansprüche 1 bis 6,
**dadurch gekennzeichnet,**
**dass** das Rahmenprofil (30) eine Dichtfläche (28) bildet, die senkrecht zu dem Wandelement (21) steht und zur Außenseite des Gehäuseteils (20) gerichtet ist.

8. Gehäuse nach Anspruch 1,
**dadurch gekennzeichnet,**
**dass** das Gehäuseteil (20) vorder- und/oder rückseitig mit einer Tür (40) und/oder einer Rückwand (60) verschlossen ist, wobei die Tür (40) und/oder die Rückwand (60) an den anprofilierten Rahmenprofilen (30) befestigt ist/sind.

## Claims

1. Housing (10), comprising three housing parts (20) for a switchgear cabinet, having three wall elements (21) arranged in a U-shape to one another, connected to one another as one part in housing corner regions by means of bending edges (29), wherein each housing part (20) comprises a wall element (21) comprising in turn on at least one of its edges an integrally profiled frame profile (30), wherein the frame profile (30) has, on its housing inner face, profile sides (33, 34) with attachment mounts (35, 36), wherein the frame profile (30) comprises two first profile sides (31, 33) which are oriented parallel to the wall element (21) and two second profile sides (31, 34) which in each case stand perpendicular to the wall element (21), **characterized in that**
the first and the second profile sides (31, 33, 34) comprise in each case a series of attachment mounts (35, 36), and the frame profile (30) forms a closed profile section (P), connected to which, indirectly or directly, is an open profile section (O),
wherein
two of the profile sides (31, 33, 34) are arranged at right angles to one another, and in each case delimit the closed profile section (P) on the inner face,
and
two more of the profile sides (31, 33, 34) are arranged at right angles to one another, and delimit the open profile section (O) on the inner face,
wherein the wall element (21) is formed onto the frame profile (30) by way of a transition section (22), and the transition section (22) merges into an edge (23), of which one contact section (24) is edged and oriented at right angles to the wall element (21),
wherein the contact section (24), together with a further contact section (26) and an attachment mount (25), forms a V-shaped rainwater gully, wherein the rainwater gullies of the frame profiles (30) merge into one another in the abutment regions of the frame profiles (30);
and wherein the vertical wall elements (21) delimiting the open U-side are connected to one another by means of a switchgear cabinet base.

2. Housing (10) according to claim 1,
**characterized in that**
the frame profile (30) forms on the outer side an open attachment mount with a securing section (25) for attachment parts.

3. Housing (10) according to claim 1,
**characterized in that**
the securing section (25) of the attachment mount stands perpendicular to the cross-section diagonals of the frame profile (30), and that the wall element (21) extends in the direction of the wall element plane over the securing section (25).

4. Housing (10) according to any one of claims 1 to 3,
**characterized in that**
the frame profile (30), with two of its profile parts standing at an angle to one another (securing section 25 and contact section (26)) form a rainwater gully.

5. Housing (10) according to any one of claims 1 to 4,
**characterized in that**
it comprises two wall elements (21) parallel to one another, which, by means of a further wall element (21), are integrally connected in U-shape, and that the frame profiles (30) of the wall elements (21) merge into one another in the wall element transition regions.

6. Housing (10) according to any one of claims 1 to 5,
**characterized in that**
two frame profiles (30) are profile-attached to one another at the wall element, on opposite wall element sides in such a way that the frame profiles (30) are oriented parallel to one another in respect of their longitudinal axes.

7. Housing (10) according to any one of claims 1 to 6,
**characterized in that**
the frame profile (30) forms a sealing surface (28), which stands perpendicular to the wall element (21) and is directed towards the outer side of the housing part (20).

8. Housing according to claim 1,
**characterized in that**
the housing part (20) is closed on its front and/or rear side by a door (40) and/or a rear wall (60), wherein the door (40) and/or the rear wall (60) is/are secured to the frame profiles (30) which are profile-attached.

## Revendications

1. Boîtier (10) qui comprend trois parties de boîtier (20) pour une armoire de commande avec trois éléments de parois (21) disposés entre eux en forme de U, qui sont reliées d'une seule pièce entre elles dans des angles du boîtier au moyen d'arêtes pliées (29), chaque partie de boîtier (20) comprenant un élément de paroi (21), qui comprend, au niveau d'au moins un de ses bords un profilé de cadre (30) profilé d'une seule pièce, le profilé de cadre (30) comprenant, au niveau de l'intérieur du boîtier, des côtés de profilé (33, 34) avec des logements de fixation (35, 36), le profilé de cadre (30) comprenant deux premiers côtés de profilé (31, 33), qui sont parallèles à l'élément de paroi (21), et deux deuxièmes côtés de profilé (31, 34), qui sont chacun perpendiculaires à l'élément de paroi (21),
**caractérisé en ce que** les premiers et les deuxièmes côtés de profilés (31, 33, 34) comprennent chacun une série de logements de fixation (35, 36) et le profilé de cadre (30) forme une portion de profilé fermée (P) à laquelle est raccordée indirectement ou directement une portion de profilé ouverte (O),
deux des côtés du profilé (31, 33, 34) étant disposés perpendiculairement entre eux et délimitant chacun la portion de profilé fermée (P) à l'intérieur et
deux autres des côtés du profilé (31, 33, 34) étant disposés perpendiculairement entre eux et délimitant la portion de profilé ouverte (O) à l'intérieur,
l'élément de paroi (21) étant moulé, au-dessus d'une portion de transition (22), sur le profilé de cadre (30) et la portion de transition (22) se transformant en un rebord (23), à partir duquel la portion d'appui (24) est chanfreinée, qui est orientée perpendiculairement à l'élément de paroi (21),
la portion d'appui (24) formant, avec une autre portion d'appui (26) et une portion de fixation (25), une gouttière en forme de V, les gouttières des profilés de cadres (30) se transformant dans les zones de jointure des profilés de cadres (30),
et les éléments de parois verticaux (21) délimitant le côté ouvert du U étant reliées entre elles au moyen d'un socle d'armoire de comamnde.

2. Boîtier (10) selon la revendication 1,
**caractérisé en ce que**
le profilé de cadre (30) forme, à l'extérieur, un logement de fixation ouvert avec une portion de fixation (25) pour éléments rapportés.

3. Boîtier (10) selon la revendication 1,
**caractérisé en ce que**
la portion de fixation (25) du logement de fixation est perpendiculaire aux diagonales de la section transversale du profilé de cadre (30) et **en ce que** l'élément de paroi (21) s'étend en direction du plan des éléments de paroi par l'intermédiaire de la portion de fixation (25).

4. Boîtier (10) selon l'une des revendications 1 à 3,
**caractérisé en ce que**
le profilé de cadre (30) forme, avec ses parties de profilés formant un angle entre elles (portion de fixation (25) et portion d'appui (26)), une gouttière.

5. Boîtier (10) selon l'une des revendications 1 à 4,
**caractérisé en ce que**
il comprend deux éléments de parois (21) parallèles entre eux qui sont reliés entre eux d'une seule pièce en forme de U au moyen d'un autre élément de paroi (21) et **en ce que** les profilés de cadre (30) des éléments de parois (21) se transforment dans les zones de transition des éléments de parois.

6. Boîtier (10) selon l'une des revendications 1 à 5,
**caractérisé en ce que**
sur l'élément de paroi, deux profilés de cadre (30) sont profilés sur des côtés opposés de l'élément de paroi de façon à ce que les profilés de cadre (30) soient orientés parallèlement les uns par rapport aux autres en ce qui concerne leurs axes longitudinaux.

7. Boîtier (10) selon l'une des revendications 1 à 6,
**caractérisé en ce que**
le profilé de cadre (30) forme une surface d'étanchéité (28) qui est perpendiculaire à l'élément de paroi (21) et est orienté vers l'extérieur de la partie de boîtier (20).

8. Boîtier (10) selon la revendication 1,
**caractérisé en ce que**
la partie de boîtier (20) est fermé, à l'avant et/ou à l'arrière, avec une porte (40) et/ou une paroi arrière (60), la porte (40) et/ou la paroi arrière (60) étant fixée aux profilés de cadre (30) profilés.
